# EUROPEAN PATENT SPECIFICATION

(11) **EP 0 219 115 B1**
(45) Date of publication and mention of the grant of the patent: **10.04.1996**
(21) Application number: 86114266.9
(22) Date of filing: 15.10.1986
(51) Int. Cl.: D06F 37/26, B29C 45/16

(54) **Method for making a laundering tube for a laundry washing machine and laundering tub thus made**
Verfahren zur Herstellung eines Waschmaschinenbehälters und mittels eines solchen Verfahrens hergestellter Behälter
Procédé pour la fabrication d'une cuve pour machine à laver le linge et cuve faite au moyen de ce procédé

(30) Priority: 15.10.1985 IT 4574785
(43) Date of publication of application: 22.04.1987
(73) Proprietor: INDUSTRIE ZANUSSI S.p.A., I-33170 Pordenone (IT)
(72) Inventor: Cinello, Arturo, I-33032 Bertiolo Udine (IT); Durazzani, Piero, I-33080 Porcia Pordenone (IT)
(74) Representative: Grünecker, Kinkeldey, Stockmair & Schwanhäusser Anwaltssozietät

(56) References cited:
- EP-A- 0 043 429
- EP-A- 0 127 360
- DE-U- 7 320 627
- FR-A- 1 544 257
- FR-A- 2 316 062
- US-A- 4 423 540

## Description

The present invention relates to a plastic laundering tub for a laundry washing machine, the tub being adapted to contain a rotatable drum, the drive shaft of which projects from one end wall of said drum and is supported by bearing means comprising at least two bearings disposed within a passage formed by injection-moulding of the tub at a respective end wall thereof and disposed in an axially-spaced relationship with a spacer element therebetween; said spacer element extending over a substantial portion of the length of said passage and said tub with said passage being injection moulded around said bearing means.

From the European patent No. 0 043 429, a plastic laundering tub is known, an end wall of this tub carrying a metal sleeve formed with seats for bearings mounting the shaft of the drum of the laundering washing machine. This tub requires the seats for the bearings in the metal sleeve to be separately and accurately machined, and the bearings to be force-fitted into the seats of the sleeve after the latter has been secured to the respective end wall of the tub. The construction and manufacture of this tub is obviously rather complicated.

A plastic laundering tub as mentioned at the beginning of the description and almost completely made of a plastic material is known from the Italian utility model No. 162,401. This tub is integrally formed with a respective end wall carrying at least two bearings for supporting the shaft of the drum of the machine. The bearings are maintained at axially-spaced positions by a metal sleeve interposed therebetween. It has been found in practical use that this type of tub is particularly critical adjacent the locations of the support bearings for the drum shaft during rotation of the drum. Under these conditions, the bearings are subjected to considerable mechanical stresses tending to progressively deform the material of the tub adjacent the locations of the bearings.

From FR-A-2 316 062, a bearing is known, which bearing includes two bearing rings held in axially-spaced positions by a spacer ring interposed therebetween. The two bearing rings and the spacer ring are surrounded by an outer bush of a plastic material. This outer bush is injection-moulded around the two bearing rings and the spacer ring.

It is the object of the present invention to provide a laundering tub of a plastic material for a laundering washing machine of the type as mentioned at the beginning, which is improved over such a laundering tub as known from the prior art.

The laundering tub according to the present invention is characterized in that the two bearings and said spacer element are disposed within the sleeve made of a plastic material of higher mechanical resistance than that of the remaining tub and extending substantially throughout the length of said passage; wherein said spacer element is an injection moulded plastic element, said sleeve is injection-moulded around the two bearings and the spacer element and the remaining tub is injection-moulded around the sleeve with the bearings and said spacer element disposed therein.

According to these inventive features, a plastic laundering tub for a laundering washing machine which, to the greatest possible extent, is made from a plastic material can be economically produced. Only the sleeve has to be made of an expensive plastic material capable of sustaining the mechanical stresses acting on the bearings while the remaining tub can be made of an inexpensive plastic material. Furthermore, the plastic laundering tub according to the present invention can be completely produced by the efficient injection-moulding process. The spacer element is also made of a plastic material so that the plastic laundering tub according to the present invention can be made in a threestep injection-moulding processing using a first mould for the spacer element, a second mould for the assembly consisting of the sleeve where the two bearings and the spacer element are disposed therein and a third mould for the remaining tub which is injection-moulded around said assembly.

The characteristics of the invention will become more clearly evident from the following description, given by way of example with reference to the accompanying drawings, wherein:
fig. 1 shows an axially sectioned view of a laundering tub according to an embodiment of the invention, and
figs. 2, 3 and 4 show diagrammatical sictional views representing successive phases of the manufacture of the tub according to fig. 1.

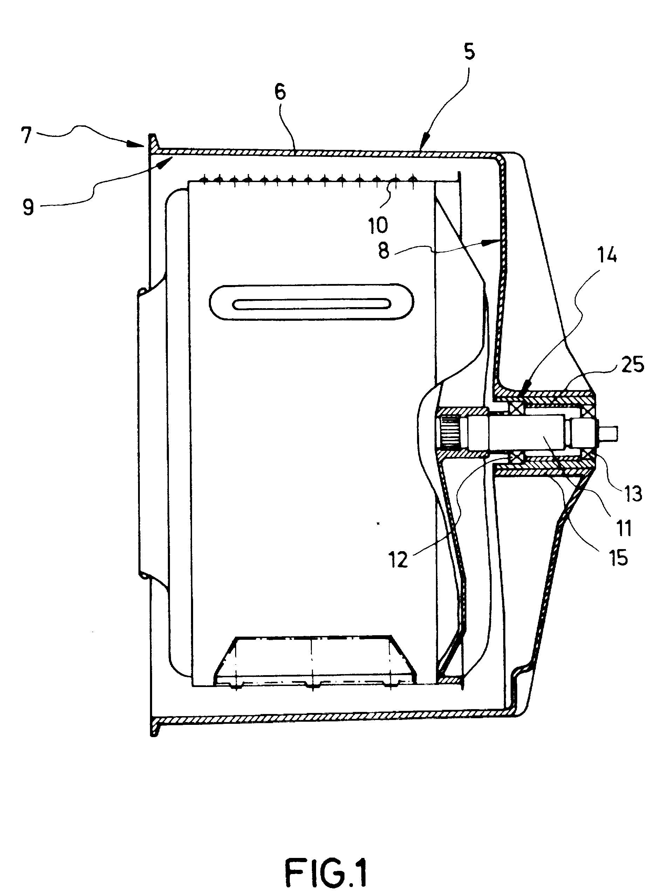

With reference to fig. 1, a laundering tub 5 according to the invention is substantially made of a plastic material and comprises a peripheral wall 6 and two opposite end walls 7 and 8, of which end wall 7 is formed with an access opening 9.

The tub is adapted to contain a rotatable drum 10, and is mounted in a conventional manner in the housing (not shown) of a laundry washing machine.

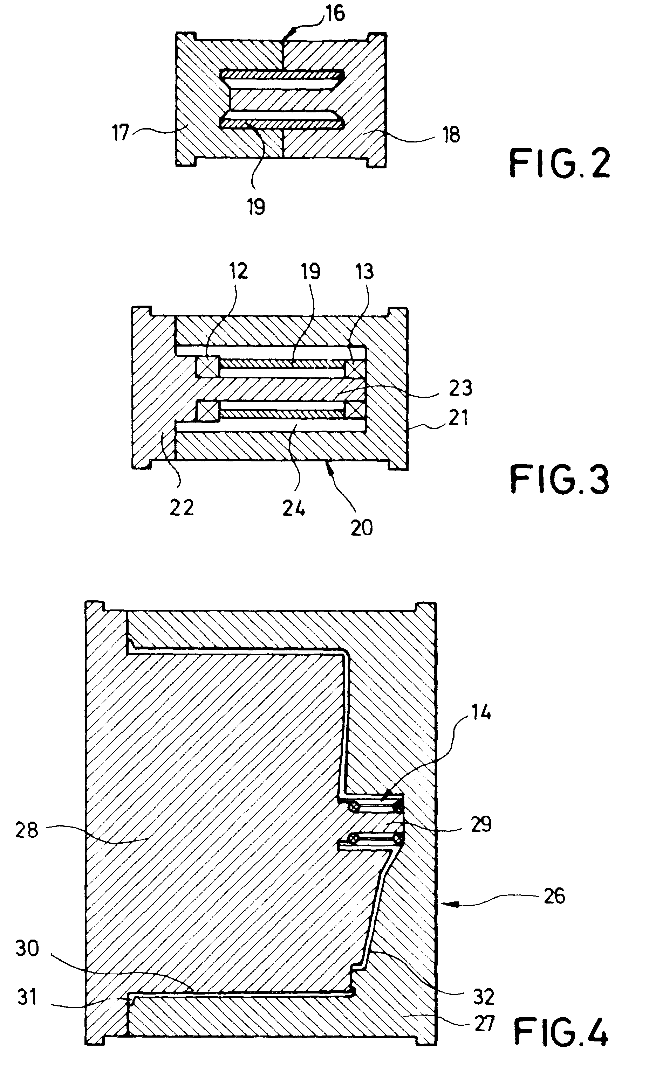

Drum 10 is provided with a drive shaft 11 supported by at least two axially spaced bearings 12 and 13 retained in a sleeve 14 made of a plastic material and passing through a hub portion 15 formed in end wall 8 of tub 5. The tub is made by a manufacturing method involving successive phases as depicted in figs. 2, 3 and 4.

In particular, this method is initially directed to the manufacture of sleeve 14 separately from tub 5, preferably by injection-moulding in two successive processing phases (shown respectively in figs. 2 and 3) of a plastic material having a high resistance against mechanical stresses, for instance glass-fibre reinforced polyester.

For the first processing phase, use is made of a first mould 16 (fig. 2) having a female clement 17 and a male element 18 configured to form a spacer element 19 in the shape of a cylindrical sleeve, the function of which to be explained as the description proceeds.

In the subsequent second processing phase, use is made of a second mould 20 (fig. 3) having a female element 21 and a male element 22 configured to form the sleeve 14 as specified above. More particularly, male element 22 of mould 20 is provided with a lateral cylindrical projection 23 adapted to have bearing 12, spacer element 19 and bearing 13 mounted thereon prior to being inserted into female element 21. After bearing 12, spacer element 19 and bearing 13 have been thus mounted on projection 23, the latter is inserted into Female element 21 into compressive engagement therewith of bearing 13 to thereby define an annular cavity between the outer surfaces of bearings 12 and 13 and spacer element 19 and the inner wall surface of female element 21.

A subsequently injected plastic material is thus injection-moulded about bearings 12, 13 and spacer element 19 so as to form the cylindrical wall 25 of sleeve 14 (fig. 1). At the end of this operation, sleeve 14 is placed in a third mould 26 (Fig. 4) having a female element 27 and a male element 28 cooperating to define a cavity for injection-moulding tub 5 by the use of another plastic material having a lesser resistance against mechanical stresses than the previous one, for instance polypropylene.

In particular, male element 28 of mould 26 *has* a lateral cylindrical projection 29 adapted to have sleeve 14 mounted thereon prior to male element 28 being inserted into female clement 27. As male element 28 is subsequently inserted into female element 27 preparatory to injection-moulding tub 5, projection 29 maintains sleeve 14 in position between female element 27 and male element 28 adjacent end wall 8 of tub 5 while additionally preventing the plastic material subsequently injected into mould 26 from penetrating into the sleeve itself.

In the closed state of mould 26, female element 27 and male element 28 cooperate to define cavitics 30, 31 and 32 communicating with one another for injection-moulding peripheral wall 6, end wall 8 and a peripheral flange for securing end wall 7 to tub 5.

The finished tub is thus made of two different types of plastic material, namely, a more expensive first type having a high resistance against mechanical stresses, only a limited amount of which is employed for injection-moulding the portion supporting the drive shaft of the drum, and a less expensive second type having a lesser resistance against mechanical stresses than the previous one, which is injection-moulded about the plastic material of the first type at a sufficient amount for forming the remainder of the tub. This permits simple injection-moulding techniques to be employed for making a plastic laundering tub provided with a reliable mounting for the drum made of a non-deformable material.

## Claims

1. A plastic laundering tub for a laundering washing machine, the tub (5) being adapted to contain a rotatable drum (10), the drive shaft (11) of which projects from one end wall of said drum and is supported by bearing means comprising at least two bearings (12,13) disposed within a passage formed by injection-moulding of the tub at a respective end wall thereof and disposed in an axially spaced relationship with a spacer element therebetween; said spacer element extending over a substantial portion of the length of said passage and said tub with said passage being injection moulded around said bearing means,
**characterised in that**
the two bearings and said spacer element are disposed within a sleeve (25) made of a plastic material of higher mechanical resistance than that of the remaining tub and extending substantially throughout the length of said passage;
wherein said spacer element is an injection-moulded plastic element (19), said sleeve is injection-moulded arcund the two bearings and the spacer element and the remaining tub is injection-moulded around the sleeve with the bearings and said spacer element disposed therein.

2. A plastic laundering tub according to claim 1, wherein the sleeve is made from glass fibre reinforced polyester.

3. A plastic laundering tub according to claim 1 or 2, wherein the remaining tub is made from polypropylene.

## Patentansprüche

1. Ein Plastikwaschfaß für eine Wäschewaschmaschine, wobei das Faß (5) dazu vorgesehen ist, eine drehbare Trommel (10) aufzunehmen, deren Antriebswelle (11) von einer Endwand der Trommel vorsteht und durch eine Lagereinrichtung gehaltert ist, welche wenigstens zwei Lager (12, 13) umfaßt, die innerhalb eines Durchgangs angeordnet sind, welcher durch ein Spritzgußherstellungsverfahren des Fasses an einer jeweiligen Endwand davon vorgesehen ist, und die in axial beabstandeter Relation mit einem Abstandselement dazwischen angeordnet sind; wobei das Abstandselement sich über einen wesentlichen Abschnitt der Länge des Durchgangs erstreckt, und das Faß mit dem Durchgang um die Lagereinrichtung herum im Spritzgußverfahren gegossen ist,
**dadurch gekennzeichnet**,
daß die zwei Lager und das Abstandselement innerhalb einer Buchse (25) angeordnet sind, wobei die Buchse aus einem Plastikmaterial mit höherer mechanischer Widerstandsfähigkeit als diejenige des übrigen Fasses hergestellt ist und sich im wesentlichen über die Länge des Durchgangs erstreckt;
wobei das Abstandselement ein im Spritzgußverfahren hergestelltes Plastikelement (19) ist, die Buchse im Spritzgußverfahren um die zwei Lager und das Abstandselement herum gegossen ist, und das übrige Faß im Spritzgußverfahren um die Buchse mit dem darin angeordneten Lager und dem Abstandselement herum gegossen ist.

2. Ein Plastikwaschfaß nach Anspruch 1, wobei die Buchse aus glasfaserverstärktem Polyester hergestellt ist.

3. Ein Plastikwaschfaß nach Anspruch 1 oder 2, wobei das übrige Faß aus Polypropylen hergestellt ist.

## Revendications

1. Cuve de lavage en matière plastique pour un lave-linge, la cuve (5) étant adaptée pour contenir un tambour tournant (10), dont l'arbre d'entraînement (11) se projette d'une paroi terminale dudit tambour et est supporté par des moyens de palier comprenant au moins deux paliers (12, 13) disposés à l'intérieur d'un passage formé par le moulage par injection de la cuve au niveau d'une paroi terminale respective de celle-ci et disposés en étant axialement espacés l'un de l'autre par un élément d'espacement monté entre eux, ledit élément d'espacement s'étendant sur une partie notable de la longueur dudit passage, et ladite cuve avec ledit passage étant moulée par injection autour desdits moyens de palier, caractérisée en ce que
les deux paliers et ledit élément d'espacement sont disposés à l'intérieur d'un manchon (25) en une matière plastique ayant une résistance mécanique supérieure à celle du reste de la cuve et s'étendant pratiquement sur toute la longueur dudit passage; et en ce que
ledit élément d'espacement est un élément en matière plastique moulé par injection (19), que ledit manchon est moulé par injection autour des deux paliers et de l'élément d'espacement et que le reste de la cuve est moulé par injection autour du manchon à l'intérieur duquel sont disposés les paliers et ledit élément d'espacement.

2. Cuve de lavage en matière plastique selon la revendication 1, dans laquelle le manchon est fabriqué en polyester renforcé de fibres de verre.

3. Cuve de lavage en matière plastique selon l'une des revendications 1 et 2, dans laquelle le reste de la cuve est fabriqué en polypropylène.
